# EUROPÄISCHE PATENTANMELDUNG

(11) **EP 1 175 952 A1**
(43) Veröffentlichungstag der Anmeldung: **30.01.2002**
(21) Anmeldenummer: 01000317.6
(22) Anmeldetag: 25.07.2001
(51) Int. Cl.: B23K 20/12, H01J 9/14, H01J 35/10

(54) **Verfahren zum Verbinden von Werkstücken**

(30) Priorität: 27.07.2000 DE 10036614
(71) Anmelder: Philips Corporate Intellectual Property GmbH, 52064 Aachen (DE); Koninklijke Philips Electronics N.V., 5621 BA Eindhoven (NL)
(72) Erfinder: Jacob, Heinz-Jürgen, 52064, Aachen (DE)
(74) Vertreter: Volmer, Georg, Dipl.-Ing.

(57) **Zusammenfassung**

Es wird ein Verfahren zum Verbinden von Werkstücken beschrieben, das insbesondere zur Befestigung eines Anodenstils (5) an einer Stimplatte (6) eines Rotormantels (7) in einer Drehanoden-Röntgenröhre geeignet ist, wobei einerseits eine ausreichende Festigkeit, andererseits ein möglichst geringer Querschnitt des Anodenstils zur Erzielung einer Wärmesperre wichtig ist. Das Verfahren zeichnet sich im wesentlichen dadurch aus, dass die Werkstücke durch Reibschweißen verbunden werden und eine Verminderung des Querschnitts außerhalb eines Verbindungsbereiches, in dem die Reibschweißung liegt, in der Weise vorgenommen wird, dass die Festigkeit des Verbindungsbereiches zumindest geringfügig größer ist, als diejenige des Abschnitts mit vermindertem Querschnitt.

## Beschreibung

Die Erfindung betrifft ein Verfahren zum Verbinden eines ersten Werkstücks mit einem zweiten Werkstück, wie zum Beispiel eines Anodenstils mit einer Stirnplatte eines Rotormantels in einer Drehanoden-Röntgenröhre.

Drehanoden-Röntgenröhren umfassen neben einer Einrichtung zur Elektronenstrahlerzeugung als wesentliche Bauteile einen Rotormantel, der an einem Ende mit einer Stirnplatte abgeschlossen ist, sowie einen daran befestigten Anodenstil (Anodenwelle), der einen Anodenteller (Drehanode) trägt.

Diese Bauteile bestehen aus sehr unterschiedlichen Materialien. Während der Rotormantel im allgemeinen aus Kupfer hergestellt wird, besteht die Stirnplatte aus einer Eisen-Nickel-Cobalt-Legierung (FerNiCo) oder aus Nickel 42, und der Anodenstil ist in vielen Fällen aus einer Wolfram-Zirkonium-Molybdän-Legierung (TZM) hergestellt. Die Verbindung des Anodenstils mit der Stirnplatte erfolgt im allgemeinen durch Löten mit einem Hochtemperaturlot. Die genannten Materialien haben jedoch sehr unterschiedliche Schmelzpunkte, so dass die Lötverbindung aufgrund von Lotspalten, Bindungsfehlem usw. häufig fehlerhaft ist. Da jedoch der Rotor und insbesondere der Anodenstil durch Stöße oder eine Unwucht des Drehsystems hohen mechanischen Belastungen ausgesetzt sein kann, müssen gerade an diese Verbindung hohe Anforderungen gestellt werden.

Dieses Problem wird noch dadurch verschärft, dass der Anodenstil zur Vermeidung eines erhöhten Wärmeflusses von dem Anodenteller in den Rotormantel und das darunter befindliche Drehsystem als Wärmesperre wirken soll und deshalb seine Querschnittsfläche möglicht klein sein soll.

Als dies hat insgesamt zur Folge, dass die Ausschußquote aufgrund einer auch nur in geringem Maße fehlerhaften Lötverbindung relativ hoch und die durch die Verbindung erzielbare Festigkeit relativ gering ist.

Aus der DE-OS 29 15 418 ist ein Verfahren zum Verbinden von Werkstücken aus Werkstoffen mit stark unterschiedlichen Schmelzpunkten bekannt, bei dem die Verbindungsflächen der Werkstücke durch Reibschweißen mechanisch zusammengebracht und anschließend durch Diffusionsschweißen endgültig zusammengefügt werden. Ein wesentlicher Nachteil dieses Verfahrens besteht jedoch darin, dass es durch die zwei Schweißvorgänge relativ aufwendig und die Qualität bzw. Festigkeit der Verbindung in vielen Fällen nicht reproduzierbar ist.

Eine wesentliche Aufgabe, die der Erfindung zugrunde liegt, besteht deshalb darin, ein Verfahren zum Verbinden eines ersten Werkstücks mit einem zweiten Werkstück zu schaffen, mit dem diese Werkstücke, wie zum Beispiel ein Anodenstiel und eine Stirnplatte in einer Drehanoden-Röntgenröhre, in reproduzierbarer Weise mit hoher Festigkeit miteinander verbunden werden können.

Gelöst wird diese Aufgabe mit einem Verfahren, das sich durch folgende Verfahrensschritte auszeichnet:
- Reibschweißen des ersten Werkstücks an das zweite Werkstück;
- Vermindern des Querschnitts mindestens eines der beiden Werkstücke in einem Abschnitt außerhalb eines Verbindungsbereiches, in dem die Reibschweißung liegt, in der Weise, dass die Festigkeit des Verbindungsbereiches zumindest geringfügig größer ist, als diejenige des Abschnitts mit vermindertem Querschnitt.

Die Bruchfestigkeit ist somit nicht mehr durch die Reibschweißverbindung und eine eventuell dadurch bewirkte und kaum vorhersehbare Materialbeeinflussung, sondern allein durch die Festigkeit des Abschnitts mit vermindertem Querschnitt gegeben. Da diese Festigkeit nur von der Art des verwendeten Materials und dem Querschnitt an sich abhängig ist, ist die Festigkeit der erfindungsgemäß erzielten Verbindung in zuverlässiger Weise reproduzierbar.

Gleichzeitig wird durch die Querschnittsverminderung auch die Wärmeleitfähigkeit vermindert, was für die eingangs genannte Anwendung in Drehanoden-Röntgenröhren besonders vorteilhaft ist. Der Querschnitt wird dabei nur so groß gemacht, wie zur Erzielung der für einen sicheren Betrieb notwendigen Festigkeit unbedingt erforderlich ist. Die Querschnittsverminderung vereint somit in vorteilhafter Weise zwei verschiedene Funktionen.

Ein weiterer Vorteil besteht darin, dass das Verfahren auch zur Verbindung von Werkstücken aus Materialien mit sehr unterschiedlichen Schmelzpunkten geeignet ist, da einer eventuell dadurch verursachten Beeinträchtigung der Festigkeit der Reibschweißung durch eine entsprechend stärkere Verminderung des Querschnitts relativ zu demjenigen des Verbindungsbereiches Rechnung getragen werden kann, um die genannte Aufgabe zu lösen.

Je nach Art, Form und Abmessungen der zu verbindenden Werkstücke kann das Verfahren auch so ausgeführt werden, dass zunächst an mindestens einem der Werkstücke der Querschnitt vermindert und dann die Reibschweißung durchgeführt wird.

Die Unteransprüche haben vorteilhafte Weiterbildungen der Erfindung zum Inhalt.

Für die meisten Materialien ist die Weiterbildung gemäß Anspruch 2 sinnvoll, da die durch die Reibschweißung entstehende Wärme das Material in den an die verschweißten Flächen angrenzenden Bereichen der Werkstücke schwächen kann.

Zur weiteren Verminderung der Wärmeleitfähigkeit dient die Ausführung gemäß Anspruch 3.

Anspruch 4 beschreibt schließlich einen besonders bevorzugten Anwendungsfall für das erfindungsgemäße Verfahren.

Weitere Einzelheiten, Merkmale und Vorteile der Erfindung ergeben sich aus der folgenden Beschreibung einer bevorzugten Ausführungsform anhand der Zeichnung. Es zeigt:
Fig. 1 einen schematischen Längsschnitt durch eine Drehanoden-Röntgenröhre;
Fig. 2 einen schematischen Längsschnitt durch einen Abschnitt eines Anodenstils und eines Rotormantels während der Herstellung
Fig. 3 einen schematischen Längsschnitt gemäß Figur 2 nach der Herstellung; und
Fig. 4 eine Detaildarstellung aus Figur 3.

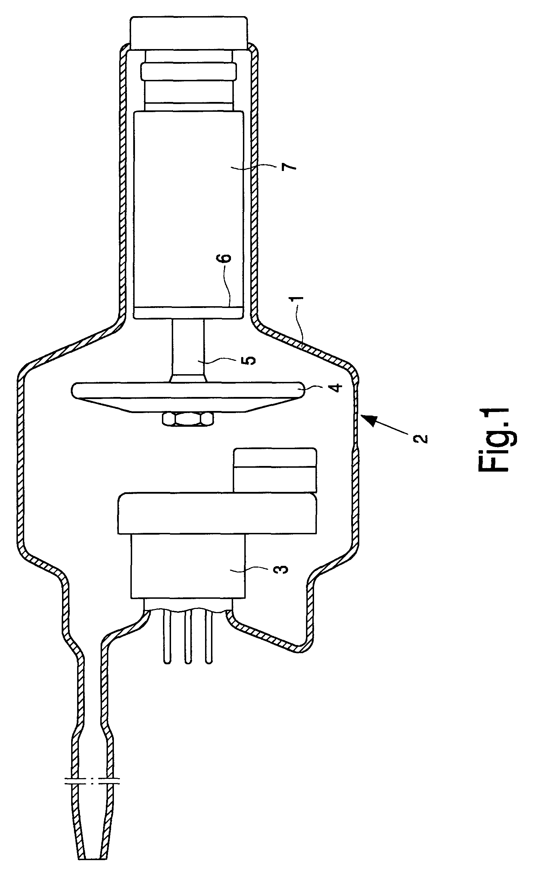

Eine Drehanoden-Röntgenröhre umfasst gemäß Figur 1 einen Röhrenkolben 1, in dem sich eine Kathodenanordnung 3 zur Erzeugung eines Elektronenstrahls sowie gegenüber dieser eine Drehanodenanordnung befindet. Diese Anordnung umfasst im wesentlichen einen Drehanodenteller 4, der an einem Ende eines Anodenstiels 5 austauschbar montiert ist. Das andere Ende des Anodenstiels 5 ist mit einer Stirnplatte 6 eines zylindrischen Rotormantels 7 verbunden.

Der durch die Kathodenanordnung 3 erzeugte Elektronenstrahl fällt auf den schrägen Abschnitt des Anodentellers 4 und erzeugt dadurch eine Röntgenstrahlung, die durch ein Austrittsfenster 2 die Röhre 1 verläßt.

Der Anodenteller 4 wird in bekannter Weise über den Anodenstil 5 und den Rotormantel 7 gedreht, um eine Überhitzung des Anodentellers 4 zu vermeiden.

Der Anodenstil 5 muss dabei einerseits die Drehbewegung übertragen und den Anodenteller 4 auch bei der Einwirkung von Stößen oder einer Unwucht des Drehsystems sicher halten, andererseits aber auch als Wärmesperre dienen, um, wie eingangs erläutert wurde, einen zu hohen Wärmefluss in den Rotormantel und das Antriebssystem zu verhindern.

Die Befestigung des Anodenstils 5 an dem Anodenteller 4 erfolgt im allgemeinen durch eine Schraubverbindung und ist insoweit unkritisch. Um die oben genannten Anforderungen zu erfüllen, wird der Anodenstil 5 an der Stirnplatte 6 nach einem erfindungsgemäßen Verfahren befestigt.

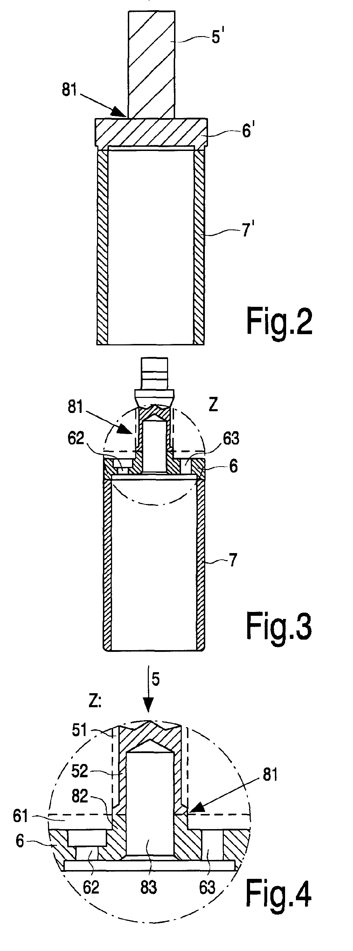

Figur 2 zeigt die betreffenden Komponenten in einem Rohzustand, nämlich einen Rotormantel 7' mit einer darauf aufgesetzten Stirnplatte 6' sowie einen massiven Stil 5'. Der Stil 5', die Stirnplatte 6' und der Rotormantel 7' werden zunächst durch Reibschweißen miteinander verbunden. Die durch die Reibschweißung entstandene Verbindungsfläche zwischen dem Stil 5' und der Stirnplatte 6' ist mit der Bezugsziffer 81 bezeichnet.

Anschließend wird daraus die in Figur 3 gezeigte Konfiguration gebildet. Gemäß der vergrößerten Detaildarstellungen in Figur 4 wird die dort gestrichelt abgegrenzte Fläche 61 an der Stirnplatte 6' sowie ein gestrichelt abgegrenzter Bereich 51 am Umfang des Stils 5' durch Abdrehen oder auf andere Weise abgetragen, so dass an dem Stil ein Abschnitt 52 mit vermindertem Querschnitt entsteht.

Wesentlich hierbei ist, dass sich die Abtragung des Bereiches 51 am Umfang des (bearbeiteten) Stils 5' nicht in einen Verbindungsbereich 82 ersteckt, der die Verbindungsfläche 81 sowie Wärmeeinflusszonen um diese Verbindungsfläche 81 umfasst. Die Wärmeeinflusszonen sind die Zonen, in denen die Eigenschaften des Materials, insbesondere dessen Festigkeit, durch die beim Reibschweißen entstandene Wärme beeinträchtigt sein können.

Die Stirnplatte 6' sowie der Stil 5' werden ferner mit einer gemeinsamen Bohrung 83 versehen. Weitere Bohrungen 62, 63, die in die Stirnplatte 6 eingebracht werden, dienen zur Montage des Drehsystems.

Wie in Figur 4 zu erkennen ist, ist somit die Wandstärke des Verbindungsbereiches 82 größer, als die Wandstärke des Abschnitts 52 an dem (fertiggestellten) Anodenstil 5.

Die Bemessung der relativen Wandstärken des Verbindungsbereiches 82 und des Abschnitts 52 wird dabei so vorgenommen, dass folgende Forderungen erfüllt sind:

Die Wandstärke des Abschnitts 52 wird nur so stark ausgeführt, wie es zur Erzielung einer (noch) ausreichenden Festigkeit für die Übertragung der Drehbewegung auf den Anodenteller 4 unter Berücksichtigung von möglichen Stoßbelastungen und Unwuchten des Drehsystems unbedingt erforderlich ist. Damit wird erreicht, dass der Wärmestrom aus dem Anodenteller 4 in den Rotormantel 7 und das Antriebssystem so gering wie möglich gehalten wird.

Die Wandstärke des Verbindungsbereiches 82 wird hingegen so groß gewählt, dass die Festigkeit dieses Bereiches größer ist, als die Festigkeit des Abschnitts 52. Die erforderliche Wandstärke hängt insbesondere davon ab, in welchem Maße die Festigkeit des verwendeten Materials in der durch die Reibschweißung erzeugten Wärmeeinflusszone beeinträchtigt ist. Im Falle von TZM (Wolfram-Zirkonium-Molybdän), das häufig für die Herstellung des Anodenstils verwendet wird, halbiert sich zum Beispiel die Festigkeit in dieser Wärmeeinflusszone. Dies bedeutet, dass die Wandstärke in dem Verbindungsbereich 82 mindestens doppelt so groß sein muss, wie die Wandstärke in dem Abschnitt 52.

Damit erfüllt die erfindungsgemäße Verbindung sowohl die Forderung nach einer ausreichenden Festigkeit, die nur durch die Art des für den Anodenstil 5 verwendeten Materials und die Wandstärke des Abschnitts 52 bestimmt wird, als auch die Forderung nach einer möglichst geringen Wärmeleitfähigkeit, d.h. einer Wärmesperre zum Schutz des Drehsystems vor zu starker Erwärmung

Wie eingangs bereits erläutert wurde, ist die Reihenfolge der beiden erfindungsgemäßen Verfahrensschritte nicht wesentlich, sondern könnte auch umgekehrt werden, wenn dies fertigungstechnisch oder aus anderen Gründen sinnvoll erscheint.

## Patentansprüche

1. Verfahren zum Verbinden eines ersten Werkstücks mit einem zweiten Werkstück mit folgenden Verfahrensschritten:
Reibschweißen des ersten Werkstücks (6) an das zweite Werkstück (5);
Vermindern des Querschnitts mindestens eines der beiden Werkstücke in einem Abschnitt (52) außerhalb eines Verbindungsbereiches (82), in dem die Reibschweißung liegt, in der Weise, dass die Festigkeit des Verbindungsbereiches (82) zumindest geringfügig größer ist, als diejenige des Abschnitts (52) mit vermindertem Querschnitt.

2. Verfahren nach Anspruch 1,
**dadurch gekennzeichnet,**
**dass** der Verbindungsbereich (82) eine durch die Reibschweißung entstandene Wärmeeinflusszone an mindestens einem der Werkstücke (5; 6) umfasst.

3. Verfahren nach Anspruch 1,
**dadurch gekennzeichnet,**
**dass** mindestens eines der Werkstücke (6, 5) zur Querschnittsverminderung mit einer Bohrung (83) versehen wird.

4. Verfahren nach Anspruch 1,
**dadurch gekennzeichnet,**
**dass** das erste Werkstück (6) eine Stirnplatte eines Rotormantels (7) und das zweite Werkstück (5) ein Anodenstil zur Befestigung eines Anodentellers (4) in einer Drehanoden-Röntgenröhre ist, wobei der Querschnitt des Abschnitts (52) an dem zweiten Werkstück (5) durch Abdrehen so weit vermindert wird, dass bei noch ausreichender Festigkeit eine möglichst geringe Wärmeleitfähigkeit erzielt wird

5. Drehanoden-Röntgenröhre mit einem Anodenstil, der mit einer Stirnplatte eines Rotormantels verbunden ist,
**dadurch gekennzeichnet,**
**dass** ein Verbindungsbereich (82), in dem der Anodenstil (5) mit der Stirnplatte (6) verbunden ist, einen größeren Durchmesser aufweist, als ein Abschnitt (52) an dem Anodenstil (5).

6. Drehanoden-Röntgenröhre nach Anspruch 5,
**dadurch gekennzeichnet,**
**dass** die Verbindung zwischen dem Anodenstil (5) und der Stirnplatte (6) eine Reibschweißverbindung ist.
